Europäisches Patentamt

(19) European Patent Office . (11) Publication number: **0 054 051**

Office européen des brevets **B1**

(12) EUROPEAN PATENT SPECIFICATION

(45) Date of publication of patent specification: **19.09.84**      (51) Int. Cl.³: **B 62 H 3/02, B 62 H 3/12**

(21) Application number: **81901818.5**

(22) Date of filing: **17.06.81**

(86) International application number:
**PCT/FI81/00048**

(87) International publication number:
**WO 82/00023 07.01.82 Gazette 82/01**

(54) **BICYCLE STOREROOM.**

(30) Priority: **24.06.80 FI 802014**

(43) Date of publication of application:
**23.06.82 Bulletin 82/25**

(45) Publication of the grant of the patent:
**19.09.84 Bulletin 84/38**

(84) Designated Contracting States:
**AT DE FR GB NL SE**

(56) References cited:
**DE-B-1 020 886**
**DE-B-1 097 303**
**DE-B-2 458 502**
**DE-C- 112 780**
**US-A-3 770 133**

(73) Proprietor: **LAUKKONEN, Aarno Arvid**
**Salpausseläntie 9 A 19**
**SF-00710 Helsinki 71 (FI)**

(72) Inventor: **LAUKKONEN, Aarno Arvid**
**Salpausseläntie 9 A 19**
**SF-00710 Helsinki 71 (FI)**

(74) Representative: **Connor, Terence Kevin et al**
**FITZPATRICKS Kern House 61/62 Lincoln's Inn**
**Fields**
**London WC2B 6EX (GB)**

## Description

The subject of the present invention is a bicycle storeroom, wherein the bicycle is arranged to be stored in the vertical position, i.e. in a position in which the straight line passing via the front and rear axles of the bicycle is substantially vertical, and wherein the door of the storeroom is hinged from above its middle, as viewed in the vertical direction, so as to be opened by tipping it from the vertical position closing the storeroom to the horizontal position so that the door portion placed above the hinges, if any, is pivoted into the storeroom and the portion below the hinges is pivoted outside the storeroom.

In prior art, vehicle storage or transportation spaces are known wherein the door is opened as a loading bridge or base onto which the vehicle is driven and along with which the vehicle is turned to vertical position into the storage or transportation space when the door is closed. Constructions of the said type are described, e.g., in the U.S. Patents 3,661,098 and 3,872,983. A storeroom is also previously known in which the bicycle is kept in the vertical position. In the storeroom of this type the bringing of the bicycle to the vertical position, however, requires such abundant and cumbersome auxiliary equipment, as illustrated by German Patent 112,780, that it is not relevant to present-day use.

Various types of bicycle stands are also known in which the bicycle is hanging or stands vertically or diagonally. Children or women are hardly ever strong enough to lift their bicycle, e.g., onto a hook hanging from the roof. Moreover, in conventional bicycle storage stands — even if the bicycle were locked to the stand — the bicycle is open to mischief makers.

The object of the present invention is to eliminate the above drawbacks, and the invention is characterized in that on the lower face of the plane of a door in the opened position, or at least as functionally connected to the lower face, there is a fastening device at the proximity of the hinges of the door, to which fastening device the bicycle, which has been pushed to underneath the door, is fastened by the handle bar, as well as possibly additionally a second fastening device fitted to the door, for also fastening the bicycle by the saddle, whereby, when the door is closed, the bicycle turns along with the door into the storeroom to the storage position.

The invention comes out more closely from the following description and from the attached drawings, wherein

Figure 1 is a side view of a bicycle storeroom door which has been opened to the horizontal position and to which the bicycle has been hung by the handle bar and the saddle,

Figure 2 is a side view of a situation in which the bicycle storeroom door has been closed and the bicycle has turned along with the door into the storeroom to the storage position.

Figure 3 shows a solution type alternative to the embodiment shown in Figure 1, wherein the door is low,

Figure 4 is a more detailed side view of the construction of the fastening device shown in Figure 3,

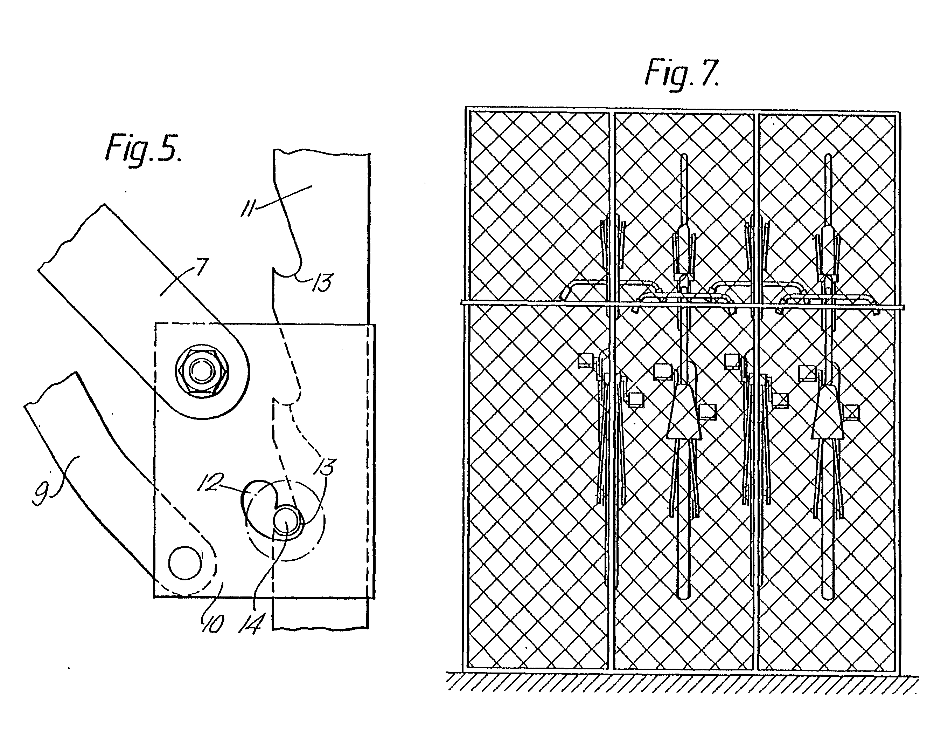

Figure 5 is a detailed view of the locking of the fastening device shown in Figure 4 to the upper position,

Figures 6 and 7 show an advantageous embodiment of the present invention, wherein the storeroom is designed as two-sided and the bicycles are placed into the storeroom as interlocking each other alternatingly from either side of the storeroom,

Figures 8 and 9 show advantageous embodiments of the invention as viewed from the top, the storerooms here having narrow triangular base form,

Figure 10 shows a solution type alternative to the embodiments shown in Figures 1 and 3, as a side view, and

Figure 11 is a more detailed side view of the construction of the fastening device of Figure 10.

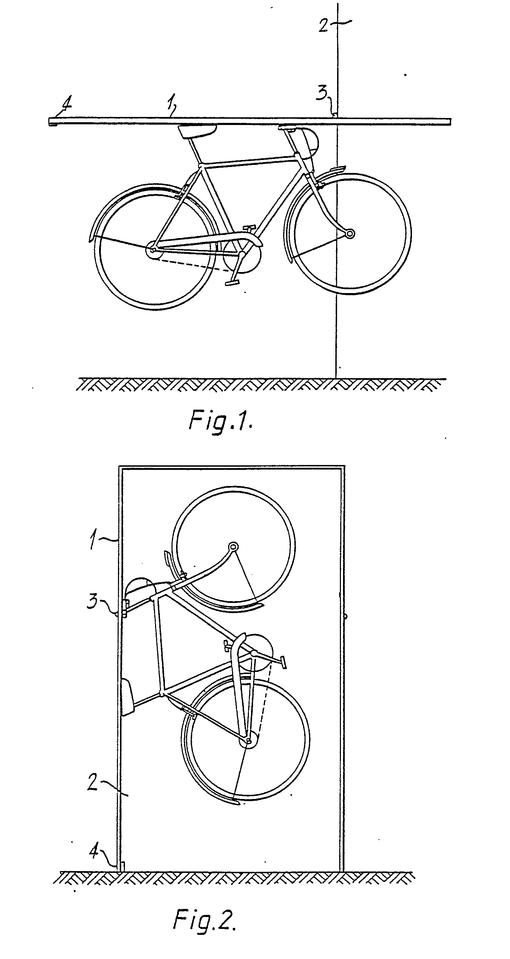

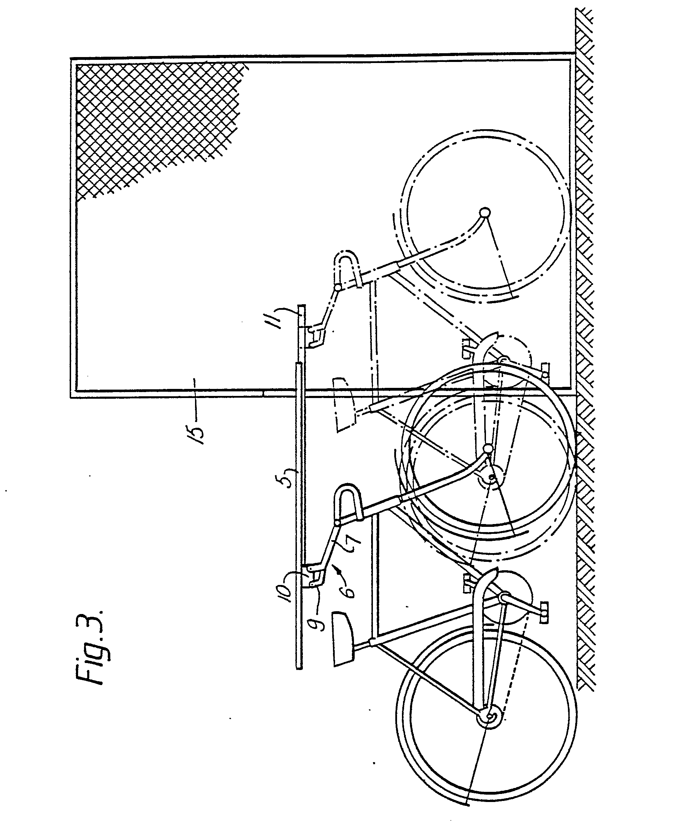

As shown in Figures 1 and 2, the bicycle storeroom 2 door 1 is hinged above its middle, as viewed in the vertical direction, at both of its sides to the door opening of the storeroom 2. The door 1 is opened by tipping, by pivoting it around the hinge section 3, i.e. in practice by pulling the portion of the door 1 placed underneath the hinge section 3 outwards and upwards, whereby the door portion placed above the hinge section is turned into the storeroom 2. When the door 1 is opened to the horizontal position, the door is locked in that position, whereby it is easy to fasten the bicycle to the door. The mechanism by means of which the door 1 can be made to remain in the horizontal position easily and simply may be any arrangement whatsoever suitable for the purpose concerned, for example an arrangement similar to those used in connection with tail gates of cars opening upwards in order to keep the tail gate in the upper position. After the door 1 has been opened to the horizontal position, the bicycle fastening devices are placed at the lower face of the door 1. When the bicycle is pushed to underneath the door 1 in the opened position, it is easy to attach the bicycle to the fastening devices placed on the door 1, e.g. as hanging by the handle bar or as hanging by the handle bar and the saddle. When the bicycle is in position at the fastening devices on the door 1 and the storeroom 2 is to be closed, the locking that keeps the door 1 in the horizontal position is opened by means of a little jerk, whereupon door 1 can be closed. Even a child with little strength is strong enough to place the bicycle himself to the fastening devices at the door 1 and to turn the bicycle up to the storage position into the storeroom 2, because in this connection the door 1 functions as a lever arm.

When the door 1 of the storeroom 2 is closed, it is locked, whereby the bicycle is safe from thieves and from mischief makers. The bicycle fastening devices on the door 1 are preferably such that, at the same time as the storeroom 2 door is locked, the locking mechanism 4 simultaneously locks the bicycle to its fastening devices.

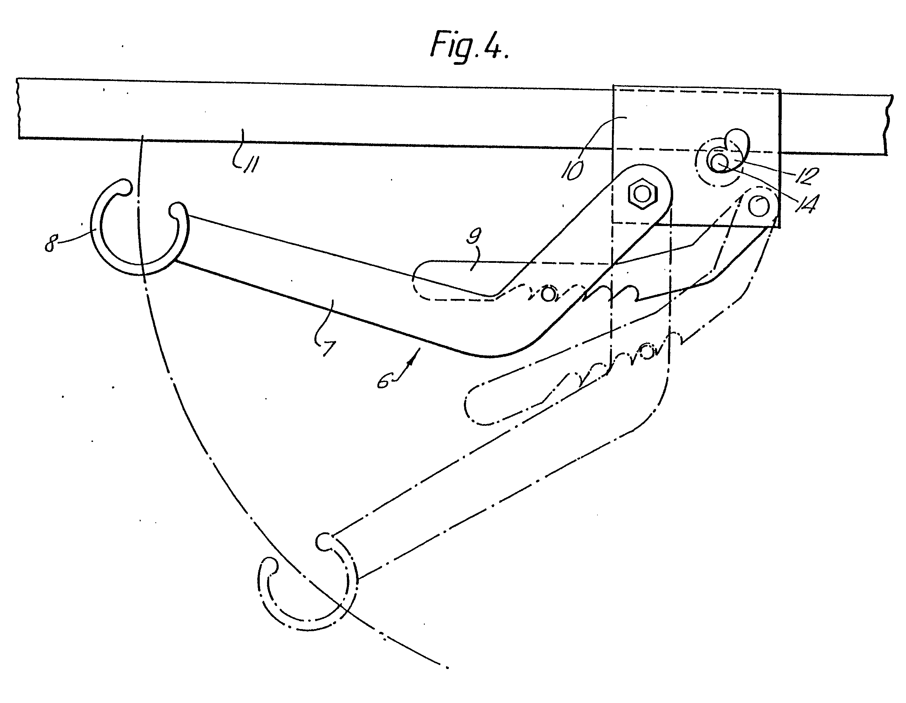

Figure 3 shows a constructional embodiment differing from that described above, wherein the bicycle is coupled to the door 5 by the handle bar alone. When the door 5 has been opened to the horizontal position, the bicycle fastening devices 6 are placed underneath the door 5. Figure 4 clarifies the mechanical operation of the fastening devices 6. After the door 5 has been opened to the horizontal position, the bicycle is placed underneath the door 5 and the fastening device 6 is, in its position shifted to the bottom end of the door 5, fastened to the handle bar of the bicycle by means of the claw 8 of the fastening arm 7. The claw 8 is preferably a fork which grasps the handle bar at both sides of its middle point. Owing to the adjusting arm 9, the fastening arm 7 can be adjusted in accordance with the bicycle height at each particular time concerned, and under these circumstances it is never necessary to lift the bicycle onto the fastening device 6. From the said position, when the bicycle is pushed, the fastening device 6 glides by means of a rider 10 along a glide arm 11 to the end of the glide arm 11 placed next to the upper end of the door 5. When the door 5 is closed, the locking 12 of the rider 10 locks the fastening device 6 by means of a pin 14 to the notches 13 on the glide arm 11, and the bicycle is thereby in the storage position. When one wishes to take the bicycle out of the storeroom 15, the door 5 is opened to the horizontal position, whereby the bicycle is fastened to the fastening device 6 at the top end of the glide arm 11.

Next, the bicycle is pulled out, whereby the fastening device 6 moves along with the bicycle to the lower end of the glide arm 11, and finally the fastening arm 7 is detached from the handle bar of the bicycle.

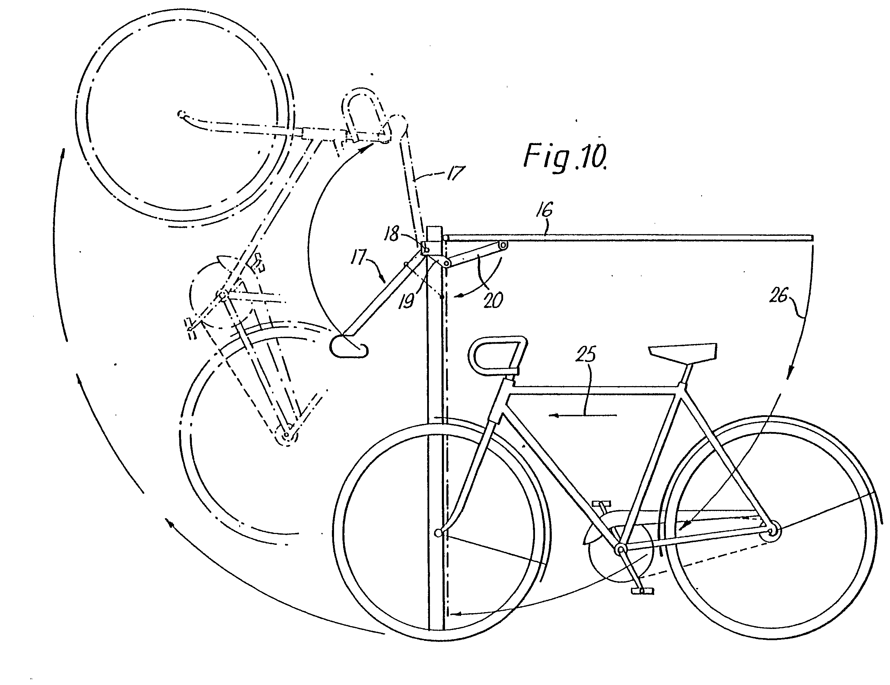

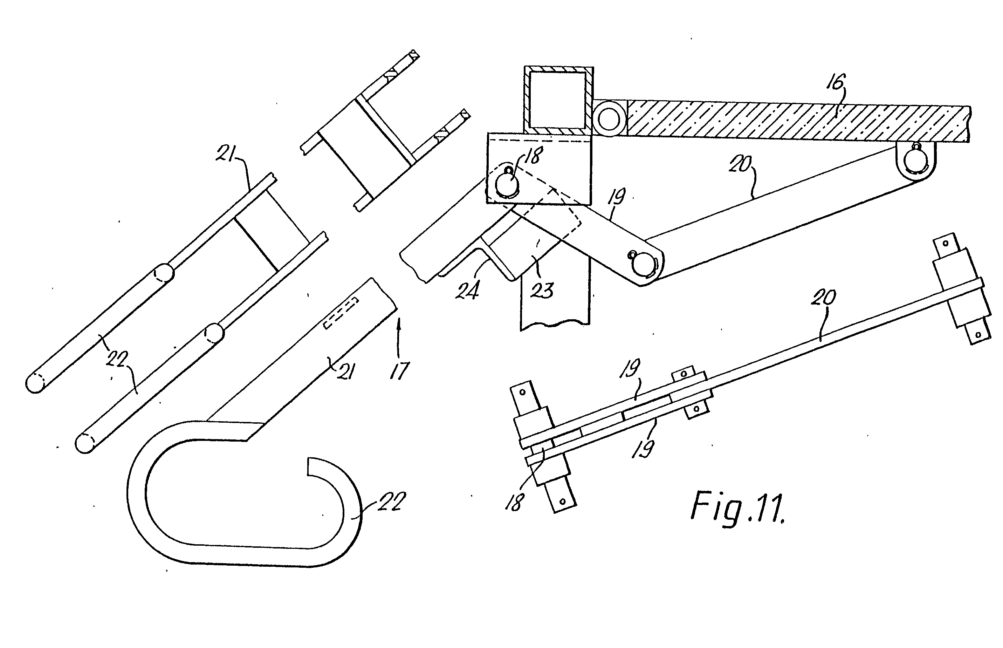

Figures 10 and 11 show a particularly favourable embodiment of a bicycle fastening device 17 controlled by the door 16 of the bicycle storeroom, which fastening device is by means of an articulated joint at 18 fastened to the upper part of the door opening and whose movement is controlled by the movement of the door 16 by the intermediate of levers 19 and 20. The fastening device 17 together with the lever systems 19 and 20 operating it come out more closely from Figure 11. The pivot arm 21 of the fastening device 17 is, at its free end, provided with a two-branch hook 22, to which the bicycle is attached at the middle of its handle bar. At its other end the pivot arm 21 is, by means of an articulated joint at 18, fastened to the upper part of the door opening. The lever 19 is also fastened to the articulated joint point 18 at one of its ends. The lever 20 is fastened by means of an articulated joint to the opposite end of the lever 19, which lever 20 is, on the other hand, at its opposite end, by means of an articulated joint fastened to the door 16. As is shown in Fig. 11, a pushing piece 23 projecting from the lever 19 down is fastened rigidly to the lever 19. A counter-piece 24, resting against the pushing piece 23, is fastened to the pivot arm 21 of the fastening device 17.

When the bicycle is pushed in the direction of the arrow 25 towards the pivot arm 21 of the fastening device 17, the pivot arm 21 can pivot freely upwards around its pivot point 18 as lifted by the handle bar of the bicycle until the hook 22 of the pivot arm 21 is at the level of the handle bar and the handle bar of the bicycle then penetrates into the hook 22. When the door 16, whose locking arrangement that keeps it in the horizontal position is not described separately in this connection, starts being turned downwards in the direction of the arrow 26, the door 16, by the intermediate of the lever arms 20 and 19, forces the pushing piece 23 against the counter-piece 24 of the pivot arm 21, and when the door is turned further towards its closed position, it forces the pivot arm 21, by the intermediate of the lever arms 20 and 19 and of the pushing piece 23 and the counter-piece 24, to pivot around its linkage point 18 upwards up to the position shown by broken lines in Figure 10. On the other hand, the pivot arm 21 lifts the bicycle along with it into the storeroom to the storage position, as is shown by broken lines in Figure 10.

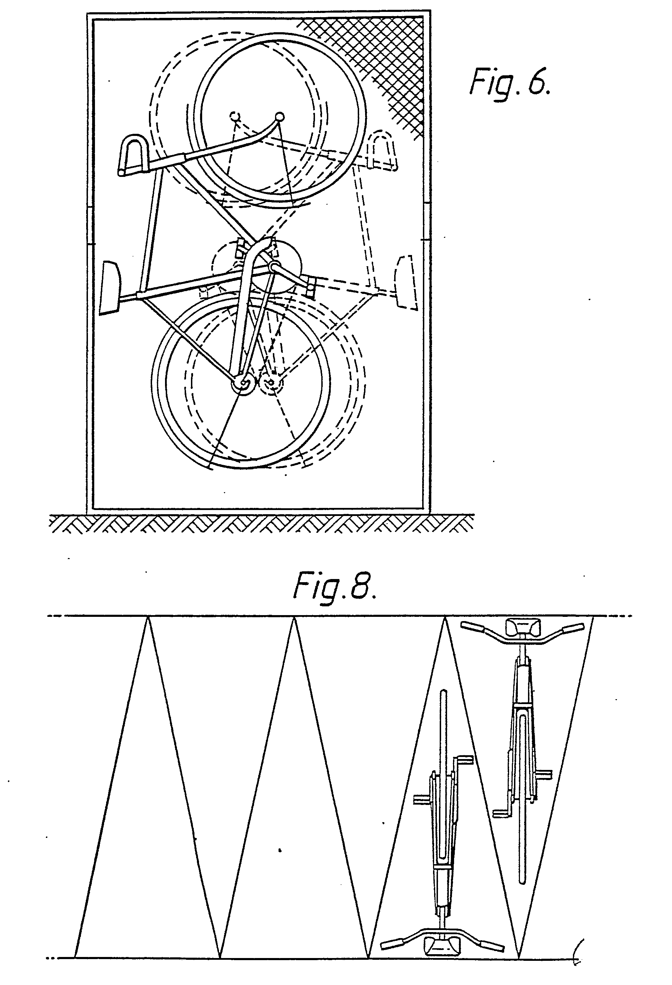

The bicycle storeroom in accordance with the present invention permits completely safe and convenient storage of three bicycles within an area of about 1.5 square metres, provided that the storeroom is used from both sides, whereby the bicycles are placed as interlocking one another in the way shown in Figures 6 and 7. In this connection it is particularly important that, when the door 1 is locked, the bicycle is at the same time locked to its fastening devices, so that the bicycle cannot be taken out from the storeroom from the opposite side, but only through the door through which it was placed into the storeroom.

Figure 8 shows a favourable embodiment of the arrangement shown in Figures 6 and 7, by making the storerooms as of triangular bottom form, whereby the storerooms can be provided with partition walls.

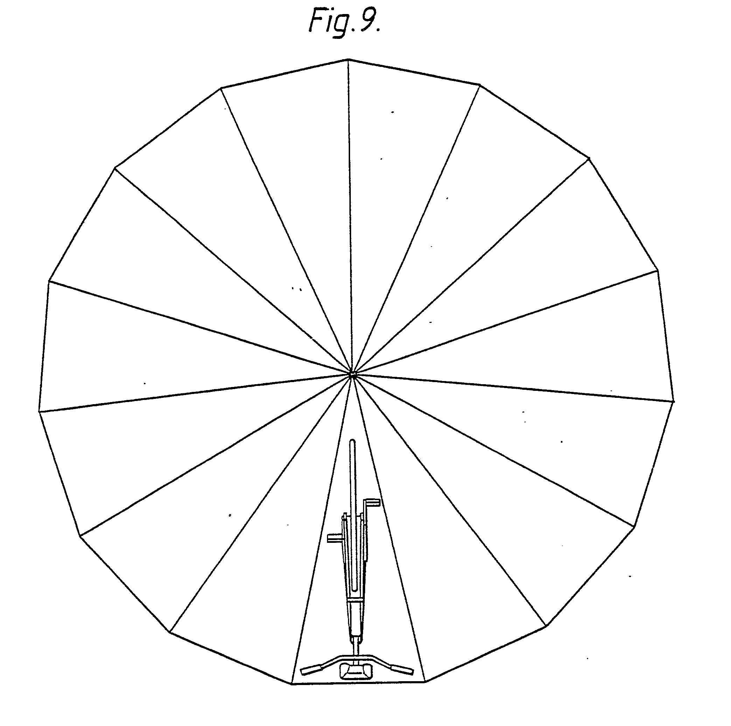

Figure 9 shows another favourable embodiment, wherein a set of storerooms has been assembled into circular form out of storerooms of triangular bottom form.

Claims

1. A bicycle storeroom, wherein the bicycle is arranged to be stored in the vertical position, i.e. in a position in which the straight line passing via the front and rear axles of the bicycle is substantially vertical, and wherein the door (1, 5, 16) of the storeroom (2, 15) is hinged from above its middle, as viewed in the vertical direction, so as to be opened by tipping it from the vertical position closing the storeroom (2, 15) to the horizontal position so that the door (1, 5, 16) portion placed above the hinges (3), if any, is pivoted into the storeroom (2, 15) and the door (1, 5, 16) portion below the hinges (3) is pivoted outside the storeroom (2, 15), characterized in that on the lower face of the plane of the door (1, 5, 16) in the opened position, or at least as functionally connected to the lower face, there is a fastening device (6, 17) at the proximity of the hinges of the door (1, 5, 16), to which fastening device the bicycle, which has been pushed to underneath the door (1, 5, 16), is fastened by the handle bar, as well as possibly additionally a second fastening device fitted to the door (1, 5, 16), for also fastening the bicycle by the saddle, whereby, when the door (1, 5, 16) is closed, the bicycle turns along with the door (1, 5, 16) into the storeroom (2, 15) to the storage position.

2. A storeroom as claimed in claim 1, characterized in that the door (1, 5, 16) of the storeroom (2, 15) is hinged at both of its sides to the door opening of the storeroom.

## Revendications

1. Un garage à bicyclettes dans lequel la bicyclette est garée en position verticale, c'est-à-dire une position dans laquelle une ligne droite passant par les axes avant et arrière de la bicyclette est substantiellement verticale, et dans lequel la porte (1, 5, 16) du garage (2, 15) est montée sur un pivot placé au-dessus de son axe, vu dans le sens vertical, de façon à pouvoir l'ouvrir en la faisant basculer de la position verticale de fermeture du garage (2, 15) à la position horizontale de sorte que la partie de la porte (1, 5, 16) se trouvant au-dessus des charnières (3), le cas échéant, pivote à l'intérieur du garage (2, 15) et la partie de la porte (1, 5, 16) au-dessous des charnières (3) pivote à l'extérieur du garage (2, 15), caractérisée par le fait que sur la face inférieure de la porte (1, 5, 16) dans la position ouverte, ou au moins fonctionnellement connecté à la face inférieure, il y a un dispositif de fixation (6, 17) à proximité des charnières de la porte (1, 5, 16) sur lequel la bicyclette qui a été poussée sous la porte (1, 5, 16) est fixée par le guidon, ainsi que, peut être, un deuxième dispositif de fixation monté sur la porte (1, 5, 16) pour fixer la bicyclette par la selle, de façon que lorsque la porte (1, 5, 16) est fermée, la bicyclette bascule avec la porte (1, 5, 16) en position garée dans le garage (2, 15).

2. Un garage, selon la revendication 1, caractérisé par le fait que la porte (1, 5, 16) du garage (2, 15) est montée sur des charnières des deux côtés de l'ouverture de la porte du garage.

## Patentansprüche

1. Fahrradlager, das für die Lagerung des Fahrrads in senkrechter Position eingerichtet ist, d.h. in einer Position, in welcher die durch Vorder- und Hinterachsen des Fahrrads gezogene gerade Linie nahezu senkrecht liegt, wobei die Tür (1, 5, 16) des Lagers (2, 15) in senkrechter Richtung gesehen in der Mitte an Scharnieren aufgehängt ist, so daß sie durch Klappen aus der senkrechten, das Lager (2, 15) verschließenden Position in die waagerechte Position geöffnet wird, wobei das Teil der Tür (1, 5, 16) über den Scharnieren (3), wenn vorhanden, in das Lager (2, 15) schwenkt und der Teil der Tür (1, 5, 16) unter den Scharnieren (3) nach der Außenseite des Lagers (2, 15) schwenkt, dadurch gekennzeichnet, daß auf der unteren Fläche der Tür (1, 5, 16) in der geöffneten Position, oder mindestens funktionsgemäß mit der unteren Fläche verbunden, eine Befestigunseinrichtung (6, 17) in der Nähe der Scharniere der Tür (1, 5, 16) vorhanden ist, an welcher besagten Befestigungseinrichtung das unter der Tür (1, 5, 16) eingeschobene Fahrrad durch die Lenkstange befestigt wird, sowie eine mögliche zusätzliche an der Tür (1, 5, 16) angebrachte zweite Befestigunseinrichtung, auch für die Befestigung des Fahrrads am Sattel, wobei beim Schließen der Tür (1, 5, 16) das Fahrrad mit der Tür (1, 5, 16) in die Lagerposition in das Lager (2, 15) geschwenkt wird.

2. Lager nach Anspruch 1, dadurch gekennzeichnet, daß die Tür (1, 5, 16) des Lagers (2, 15) mit Scharnieren auf beiden Seiten an der Türöffnung des Lagers versehen ist.

Fig.1.

Fig.2.

Fig.3.

Fig.4.

0 054 051

**Fig.7.**

**Fig.5.**

Fig. 6.

Fig. 8.

Fig.9.

Fig.10.

Fig.11.